# FASCICULE DE BREVET EUROPEEN

(11) **EP 3 584 633 B1**
(45) Date de publication et mention de la délivrance du brevet: **11.09.2024**
(21) Numéro de dépôt: 19181023.3
(22) Date de dépôt: 18.06.2019
(51) Int. Cl.: G03B 17/55, H04N 23/52, H04N 23/54, H04N 23/55

(54) **DISPOSITIF OPTIQUE POUR VEHICULE COMPRENANT UN ELEMENT DE CHAUFFAGE**
OPTISCHE VORRICHTUNG FÜR FAHRZEUG, DIE MIT EINEM HEIZELEMENT AUSGESTATTET IST
OPTICAL DEVICE FOR VEHICLE COMPRISING A HEATING ELEMENT

(30) Priorité: 18.06.2018 FR 1855337
(43) Date de publication de la demande: 25.12.2019
(73) Titulaire: Aptiv Technologies AG, 8200 Schaffhausen (CH)
(72) Inventeur: RAFALOWSKI, Arkadiusz, 32-064 Brzezinka (PL); POREDA, Witold, 12-221 Ruciane Nida (PL)
(74) Mandataire: Lewis Silkin LLP

(56) Documents cités:
- WO-A1-2016/195403
- WO-A1-2017/208981
- WO-A1-2018/052043
- KR-B1- 101 064 666
- US-A1- 2012 170 119
- US-A1- 2018 176 431

## Description

### DOMAINE TECHNIQUE

La présente invention concerne un dispositif optique pour véhicule et plus particulièrement un dispositif optique comprenant un élément de chauffage.

### ARRIERE-PLAN TECHNOLOGIQUE DE L'INVENTION

Les organes électroniques pour véhicule automobile et agencés à l'extérieur des véhicules doivent subir les contraintes environnementales telles le froid et la glace. Afin de ne pas subir les effets persistant de ces contraintes, ces organes électroniques sont généralement équipés dispositifs électriques permettant de se débarrasser des effets de ces contraintes. On peut par exemple trouver des organes électroniques munis de dispositifs électriques tels que par exemple des éléments chauffant pour combattre le gel.

Le pilotage de ces dispositifs électriques est généralement réalisé par le biais de faisceaux électriques et de connecteurs reliant une carte de contrôle électronique et les dispositifs électriques.

Le document WO 2018/052043 A1 divulgue une unité à faible conductivité d'une monture de lentille dans une caméra disposée entre un tube de logement d'une unité de lentille et un substrat de capteur. L'unité à faible conductivité a une conductivité thermique inférieure à celle du tube de logement.

Le document WO 2016/195403 A1 divulgue un module de caméra comprenant un barillet lentille dans lequel est formé un creux, comprenant au moins une lentille alignée dans l'axe optique du creux ; un support dans lequel est formé un espace interne dans lequel une partie du barillet de lentille est logée; un boîtier couplé au support et dans lequel est formé un espace interne dans lequel une carte de circuit imprimé est logée; et un premier élément chauffant qui est connecté électriquement à la carte de circuit imprimé pour chauffer la lentille.

Les solutions actuelles de raccordement électrique de ces dispositifs électriques sont encombrantes, coûteuses et lourdes.

Il est donc important de proposer une solution nouvelle résolvant ces problèmes.

### RESUME DE L'INVENTION

Un dispositif optique est défini dans la revendication 1.

Les moyens d'attache peuvent comprendre une portion élastique de sorte à s'ajuster au profil de la paroi du support de lentilles.

La bande chauffante comprend des conducteurs électriques configurés pour être parcourus par un courant électrique provenant de la carte à circuit imprimé.

La bande chauffante peut être formée par une carte à circuit imprimé de type flexible. Le moyen de connexion électrique peut être une connexion de type carte à circuit imprimé flexible en continuité de substrat avec la bande chauffante. Le moyen de connexion électrique peut comprendre une partie amincie du substrat de la carte à circuit imprimé rigide.

Selon l'invention une méthode d'assemblage d'un dispositif optique est définie dans la revendication 8.

D'autres buts et avantages de la présente invention apparaîtront au vu de la description qui suit.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- La figure 1 est une vue schématique en perspective du dispositif optique selon l'invention.
- La figure 2 est une vue schématique en perspective éclatée du dispositif optique de la figure 1.
- La figure 3 est une première vue schématique partielle en perspective en coupe transversale du dispositif optique de la figure 1 illustrant la bande chauffante agencée sur le support de lentilles.
- La figure 4 est une vue schématique partielle en perspective en coupe transversale du dispositif optique de la figure 1 illustrant un premier mode de réalisation de moyens d'attache de la bande chauffante agencée sur le support de lentilles.
- La figure 5 est une autre vue schématique partielle en perspective en coupe transversale du dispositif optique de la figure 1 illustrant un second mode de réalisation de moyens d'attache de la bande chauffante agencée sur le support de lentilles.
- Les figures 6, 7, 8 et 9 sont des vues schématiques en perspectives de quatre étapes d'assemblage du dispositif de chauffage sur le support de lentilles du dispositif optique selon l'invention.

### DESCRIPTION DES MODES DE REALISATION PREFERES

Afin de faciliter la description, et de façon non limitative, un repère orthogonal comprenant un axe longitudinal L, un axe transversal T et un axe vertical V est défini. Des orientations « bas », « haut », « dessus », « dessous », « inférieure » et « supérieure » sont définies selon la direction verticale. Des orientations « gauche », « droite » et « latérale » sont définies selon la direction transversale. Des orientations « avant » et « arrière » sont également définies selon la direction longitudinale.

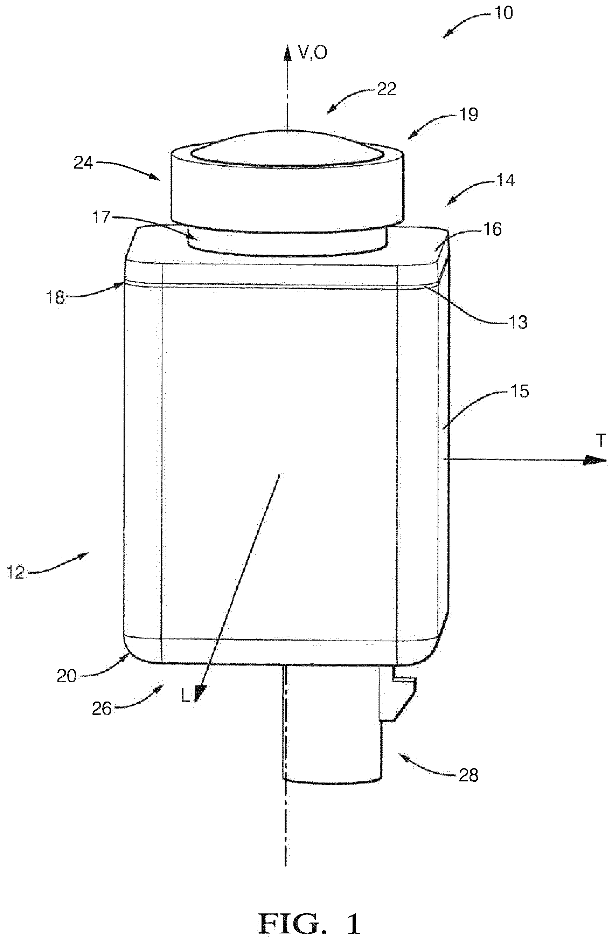

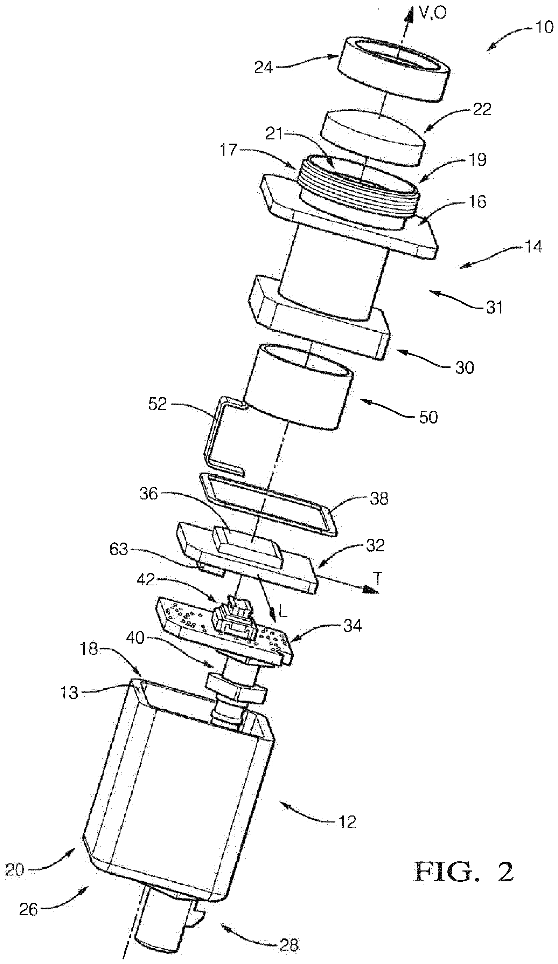

Selon la figure 1 et la figure 2, un dispositif optique 10, plus particulièrement une caméra pour véhicule est représentée. Ce type de caméra est prévu pour être monté à l'extérieur du véhicule et donc subir les conditions extérieures au véhicule tel que le climat.

Selon la figure 1, le dispositif optique 10 comprend un boîtier de protection 12 comprenant une paroi 15 de forme globalement cylindrique s'étendant selon l'axe vertical V depuis son extrémité haute 18 jusqu'à son extrémité basse 20. L'extrémité basse 20 du boîtier de protection 12 est fermée par un fond de boîtier 26. Le fond de boîtier 26 comprend un corps de connecteur 28 s'étendant verticalement vers l'extérieur du boîtier de protection 12, le corps de connecteur 28 étant venu de matière avec le fond de boîtier 26.

Le dispositif optique 10 comprend un support de lentilles 14 s'étendant verticalement dans le boîtier de protection 12. Le support de lentilles 14 est une structure creuse ouverte formant une cavité 21 s'étendant depuis son extrémité haute 19 agencée en dehors du boîtier de protection 12 jusqu'à son extrémité basse 30 insérée dans le boîtier de protection 12. L'extrémité haute 19 du support de lentilles 14 comporte une lentille optique 22 alignée selon l'axe optique O du dispositif optique 10.

Le support de lentilles 14 est maintenu en butée contre l'extrémité haute 18 du boîtier de protection 12. Le support de lentilles 14 comprend donc une plaque d'appui 16 agencée en butée contre l'extrémité haute 18 du boîtier de protection 12. Le support de lentilles 14 est fixé en appui contre l'extrémité haute 18 du boîtier de protection 12 par l'intermédiaire d'un premier joint adhésif 13 de sorte à fermer hermétiquement le boîtier de protection 12. La plaque d'appui 16 comprend une ouverture circulaire débouchant sur la cavité 21 du support de lentilles 14 et comportant une paroi supérieure 17 au boîtier de protection 12 s'étendant verticalement jusqu'à l'extrémité haute 19 du support de lentilles 14. La lentille optique 22 vient s'agencer contre la surface interne de la paroi supérieure 17 et est maintenue alignée selon l'axe optique O du dispositif optique 10 par un capot de maintien 24 fixé sur la paroi supérieure 17.

Selon la figure 2, le support de lentilles 14 comprend la paroi supérieure 17 agencée par-dessus la plaque d'appui 16 et comprend une paroi inférieure 31 au boîtier de protection 12 s'étendant verticalement depuis la plaque d'appui 16 jusqu'à son extrémité basse 30. L'extrémité basse 30 forme une base de forme globalement parallélépipédique.

Le dispositif optique 10 comprend une première carte à circuit imprimé 32 rigide.

La première carte à circuit imprimé 32 rigide est de forme globalement rectangulaire. La première carte à circuit imprimé 32 comprend sur sa face supérieure un circuit électronique de capture d'images 36 aligné avec la lentille optique 22 selon l'axe optique O du dispositif optique 10. La carte à circuit imprimé 32 est prévue pour être fixée sur l'extrémité basse 30 du support de lentilles 14 par l'intermédiaire d'un second joint adhésif 38, de sorte à fermer hermétiquement la cavité 21 du support de lentilles 14.

Le dispositif optique 10 comprend une seconde carte à circuit imprimé 34 rigide.

La seconde carte à circuit imprimé 34 comprend sur sa face inférieure des terminaux électriques 40 s'étendant verticalement et prévus pour être insérés dans le corps du connecteur 28. La seconde carte à circuit imprimé 34 est donc prévue pour être agencée en fond de boîtier 26 de sorte que ses terminaux électriques 40 puissent être insérés dans le corps du connecteur 28.

La seconde carte à circuit imprimé 34 comporte des moyens de connexions électriques 42 avec la première carte à circuit imprimé 32. La seconde carte à circuit imprimé 34 peut comprendre des composants électroniques de traitements d'images reçues du circuit électronique de capture d'image 36.

Le dispositif optique 10 comprend une bande chauffante 50 flexible. La bande chauffante 50 est configurée pour être agencée autour de la paroi inférieure 31 du support de lentilles 14. Selon le mode de réalisation représenté, et de façon non limitative, la paroi inférieure 31 du support de lentilles 14 est une paroi cylindrique annulaire. Plus particulièrement, la bande chauffante 50 est configurée pour être enroulée autour de la paroi inférieure 31 annulaire du support de lentilles 14 de sorte à être au contact de la paroi 31 annulaire tout autour de celle-ci. La bande chauffante 50 comprend également une interface de connexion électrique 52 prévue pour être reliée électriquement à l'une des deux cartes à circuit imprimé rigide 32, 34 du dispositif optique. De façon non limitative, selon ce mode de réalisation, l'interface de connexion électrique 52 est prévue pour être reliée électriquement à la première carte à circuit imprimé rigide 32 par le biais d'un connecteur électrique 63 agencé sur la face inférieure de la première carte à circuit imprimé 32. Ce choix permet de limiter la dimension, plus précisément la longueur, de l'interface de connexion électrique 52.

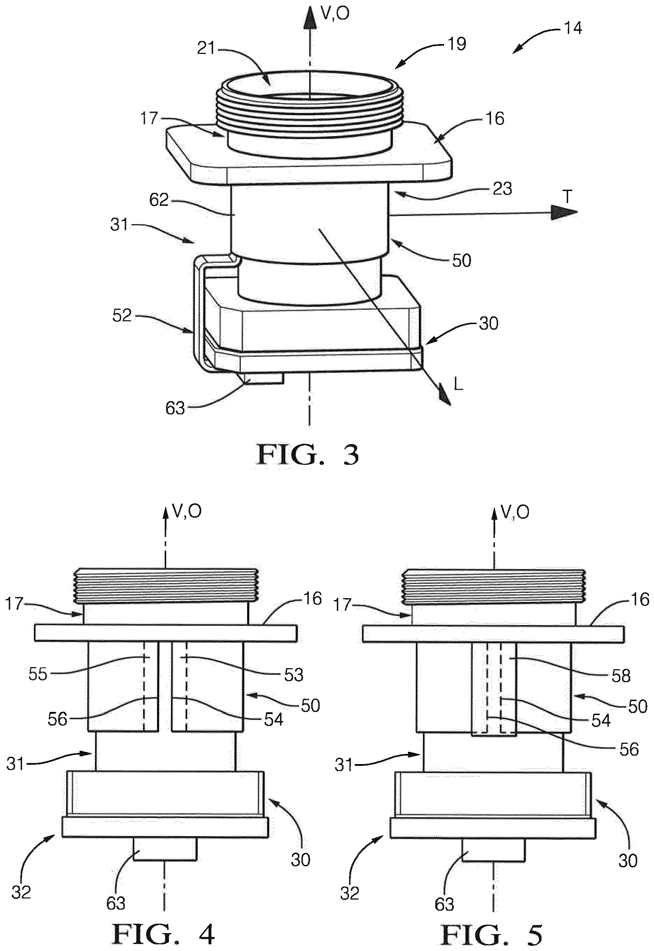

Selon la figure 3, la bande chauffante 50 est agencée autour de la paroi inférieure 31 du support de lentilles 14. La bande chauffante 50 est agencée de sorte à recouvrir l'extrémité haute 23 de la paroi inférieure 31 du support de lentille 14 de sorte à être au plus proche de la paroi supérieure du support de lentilles 14 prévue pour recevoir la lentille optique 22. La bande chauffante 50 comprend des conducteurs électriques 62 configurés pour être parcourus par un courant électrique provenant de la première carte à circuit imprimé 32.

La bande chauffante 50 est une carte à circuit imprimé flexible reliée par l'interface de connexion électrique 52 à la première carte à circuit imprimé 32. L'interface de connexion électrique 52 peut être une languette de connexion venue de matière avec la bande chauffante 50. En d'autres termes, la bande chauffante 50 et l'interface de connexion électrique 52 associée, sont une seule et unique carte à circuit imprimé flexible , par exemple en forme de T , avant son assemblage sur la paroi inférieure 31 du support de lentilles 14. La portion représentant la base du `T' forme l'interface de connexion électrique 52 de la bande chauffante, la tête du 'T' formant la bande chauffante 50 flexible configurée pour être agencée autour de la paroi inférieure 31 du support de lentilles 14.

Selon la présente invention, la bande chauffante 50, l'interface de connexion électrique 52 et la première carte à circuit imprimé 32 peuvent être une seule et unique carte à circuit imprimé de type carte à circuit imprimé flex-rigide, c'est à dire une unique carte à circuit imprimé comprenant une portion flexible comportant la bande chauffante 50 flexible et comportant la languette flexible formant l'interface de connexion électrique 52, la dite portion flexible étant en continuité du substrat de la partie principale rigide.

Selon la figure 4, les deux extrémités longitudinales 54, 56 opposées de la bande chauffante sont fixées sur la paroi inférieure 31 du support de lentilles 14. Selon la figure 4, les deux extrémités longitudinales 54, 56 comportent chacune une bande d'adhésif 53, 55 de type adhésif sensible à la pression de sorte à être coller sur la paroi inférieure 31 du support de lentilles 14.

Selon la figure 5, d'autres moyens d'attache 58 de la bande chauffante 50 sont agencés sur les extrémités 54, 56 longitudinales de la bande chauffante 50. Les moyens d'attache 58 peuvent comprendre une portion élastique de sorte à s'ajuster au profil de la paroi 31 du support de lentilles, les moyen d'attache élastique permettant de comprimer la bande chauffante 50 contre la paroi inférieure 31 du support de lentilles 14. Alternativement, un collier de serrage peut également être inséré autour de la bande chauffante 50 afin de pincer la bande chauffante 50 entre le collier de serrage et la paroi inférieure 31 du support de lentilles 14.

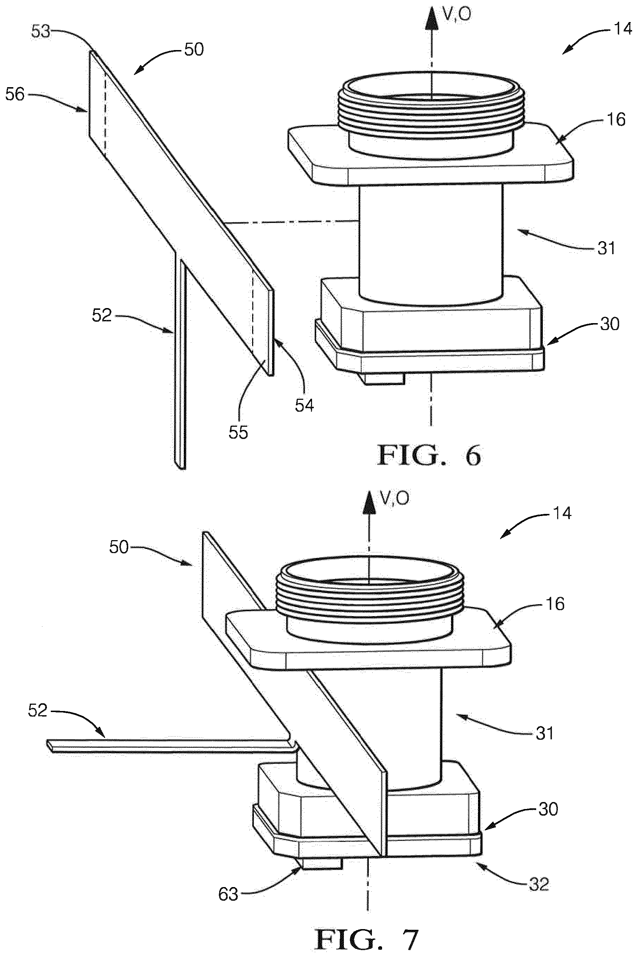

Selon les figures 6, 7, 8 et 9 quatre étapes d'assemblage du dispositif optique 10 décrit au travers des figures 1 à 5 sont illustrées.

Selon la figure 6, une première étape consiste à fournir la première carte à circuit imprimé 32 rigide comprenant le composant électronique de capture d'images 36 agencée sur le support de lentilles 14 et alignée selon l'axe optique O du dispositif 10. En complément à la fourniture du support de lentilles 14 pré-assemblé avec la première carte à circuit imprimé 32, cette première étape comprend la fourniture de la bande chauffante 50 flexible comportant l'interface de connexion électrique 52 et également les moyens d'attache 58, notamment les deux bandes adhésives 53, 55 agencées chacune sur une extrémité longitudinale 54, 56 de la bande chauffante. Il est à noter que la bande chauffante 50 est présentée face au support de lentilles 14 de manière plane, donc non courbée.

Selon la figure 7, une seconde étape consiste à plaquer la bande chauffante 50 flexible en configuration plane contre la paroi inférieure 31 du support de lentilles 14. Plus particulièrement, une des deux extrémités verticales de la bande chauffante 50 est agencée au plus près, voir au contact, de la plaque d'appui 16 du support de lentilles 14.

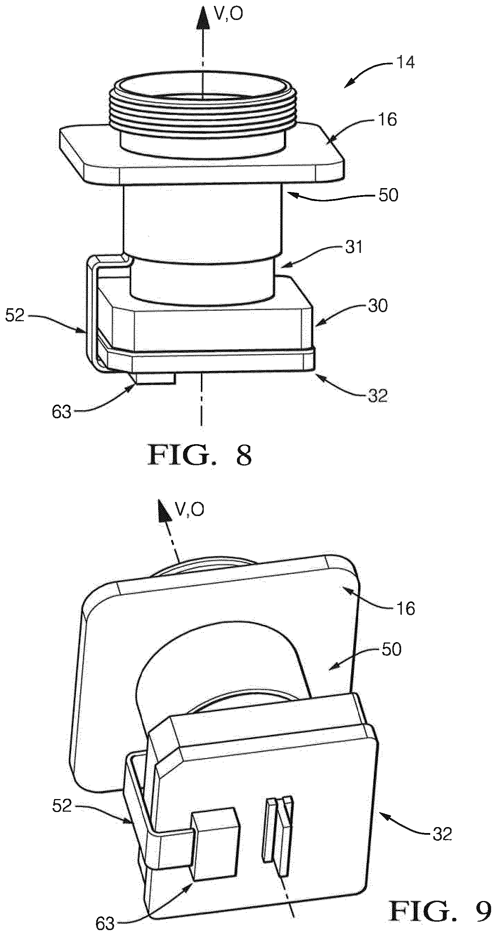

Selon la figure 8, une troisième étape consiste à agencer la bande chauffante 50 tout autour et au contact de la paroi inférieure 31 du support de lentilles 14. Cette étape est complétée par une action de maintien de la bande chauffante 50 contre la paroi inférieure 31 du support de lentilles 14 par le biais des moyens d'attache 58 de la bande chauffante 50. Plus particulièrement une pression spécifique exercée sur les extrémités longitudinales 54, 56 permet l'adhésion des deux bandes adhésives 53, 55 sur la paroi inférieure 31 du support de lentilles 14.

Enfin, selon la figure 9, une étape de raccordement de l'interface de connexion électrique 52 à la première carte à circuit imprimé est effectuée par insertion de l'interface de connexion électrique 52, c'est-à-dire de l'extrémité libre de la languette de connexion électrique, dans le connecteur électrique 63 agencé sur la face inférieure de la première carte à circuit imprimé 32 rigide.

Selon la présente invention, l'étape de la fourniture de la carte à circuit imprimé 32 rigide, l'étape de la fourniture de la bande chauffante 50 et l'étape de raccordement électrique de l'interface de connexion électrique 52 à la première carte à circuit imprimé 32 rigide sont substituées par une étape unique de fourniture d'une seule carte à circuit imprimé comprenant une carte à circuit imprimé principale rigide comportant le composant électronique de capture d'images 36, et comprenant une carte à circuit imprimé flexible comportant la bande chauffante 50 flexible et comportant une extension formant l'interface de connexion électrique 52, la dite carte à circuit imprimé flexible étant en continuité du substrat de la partie principale rigide.

## Revendications

1. Dispositif optique (10) comprenant
au moins une carte à circuit imprimé (32) rigide, la dite carte à circuit imprimé (32) comportant un circuit électronique de capture d'image (36);
un support de lentilles (14) comprenant au moins une lentille optique (22), le support de lentilles (14) comprenant une paroi (31) formant une cavité (21) s'étendant selon l'axe optique (O) du dispositif (10) depuis son extrémité haute (19) jusqu'à son extrémité basse (30), l'extrémité basse (30) étant montée sur la carte à circuit imprimé (32) rigide de sorte à aligner, selon l'axe optique (O) du dispositif (10), le circuit électronique de capture d'images (36) et la lentille optique (22); et
une bande chauffante (50) flexible agencée au contact de la paroi (31) du support de lentilles (14) et autour de la paroi (31) du support de lentilles (14), et comprenant une interface de connexion électrique (52) reliée électriquement à ladite carte à circuit imprimé (32) rigide du dispositif optique (10) ;
**caractérisé en ce que**
ladite carte à circuit imprimé (32), ladite bande chauffante (50) et ladite interface de connexion électrique (52) sont une unique carte à circuit imprimé comportant une portion principale rigide comprenant ladite carte à circuit imprimé rigide (32) et une portion flexible comprenant la bande chauffante flexible (50) et une extension formant l'interface de connexion électrique (52), ladite portion flexible étant en continuité de substrat de la partie principale rigide, et
les deux extrémités longitudinales (54, 56) de la bande chauffante (50) comprennent des moyens d'attache (58) qui serrent la bande chauffante (50) contre la paroi (31) du support de lentilles (14).

2. Dispositif optique (10) selon la revendication 1 **caractérisé en ce que** l'interface de connexion électrique (52) est reliée électriquement à la carte à circuit imprimé (32) rigide comportant le circuit électronique de capture d'image (36).

3. Dispositif optique (10) selon l'une quelconque des revendications précédentes **caractérisé en ce que** les moyens d'attache (58) comprennent une portion élastique de sorte à s'ajuster au profil de la paroi (31) du support de lentilles (14).

4. Dispositif optique (10) selon l'une quelconque des revendications précédentes **caractérisé en ce que** la bande chauffante (50) comprend des conducteurs électriques (62) configurés pour être parcourus par un courant électrique provenant de la carte à circuit imprimé (32, 34).

5. Dispositif optique (10) selon l'une quelconque des revendications précédentes **caractérisé en ce que** la bande chauffante (50) est formée par une carte à circuit imprimé de type flexible.

6. Dispositif optique (10) selon la revendication précédente caractérisé ce que l'interface de connexion électrique (52) est une connexion de type carte à circuit imprimé flexible en continuité de substrat avec la bande chauffante (50).

7. Dispositif optique (10) selon l'une quelconque des revendications précédentes caractérisé ce que l'interface de connexion électrique (52) comprend une partie amincie du substrat de la carte à circuit imprimé (32, 34) rigide.

8. Méthode d'assemblage d'un dispositif optique (10) selon l'une quelconque des revendications précédentes, **caractérisé en ce qu'**elle comporte les étapes suivantes :
fourniture d'un support de lentilles (14) comportant au moins une lentille optique (22) et comprenant une paroi (31) formant une cavité (21) s'étendant selon l'axe optique du dispositif (O);
fourniture d'une carte à circuit imprimé (32) rigide comprenant un composant électronique de capture d'images (36);
agencement de la carte à circuit imprimé (32) rigide sur le support de lentilles (14) de sorte à pouvoir aligner, selon l'axe optique (O) du dispositif (10), le circuit électronique de capture d'images (36) et la lentille optique (22);
fourniture d'une bande chauffante (50) flexible comportant une interface de connexion électrique (52) et des moyens d'attache (58);
raccordement électrique de l'interface de connexion électrique (52) à une carte à circuit imprimé (32) rigide du dispositif optique (10).
agencement de la bande chauffante (50) autour de la paroi (31) du support de lentilles (14) ;
maintien de la bande chauffante contre la paroi du support de lentilles (14) par le biais de moyens d'attache (58) agencés aux deux extrémités longitudinales (54, 56) de la bande chauffante (50), qui serrent la bande chauffante (50) contre la paroi (31) du support de lentilles (14) ;
dans lequel l'étape de la fourniture de la carte à circuit imprimé (32) rigide, l'étape de la fourniture de la bande chauffante (50) et l'étape de raccordement électrique de l'interface de connexion électrique (52) à la carte à circuit imprimé (32) rigide sont mises en oeuvre par une étape unique de fourniture d'une seule carte à circuit imprimé comprenant une carte à circuit imprimé principale rigide comportant le composant électronique de capture d'images (36), et comprenant une carte à circuit imprimé flexible comportant la bande chauffante (50) flexible et comportant une extension formant l'interface de connexion électrique (52), la dite carte à circuit imprimé flexible étant en continuité du substrat de la partie principale rigide.

## Patentansprüche

1. Optische Vorrichtung (10), umfassend
mindestens eine starre gedruckte Leiterplatte (32), wobei die gedruckte Leiterplatte (32) eine elektronische Bildaufzeichnungsschaltung (36) umfasst;
einen Linsenträger (14), der mindestens eine optische Linse (22) umfasst, wobei der Linsenträger (14) eine Wand (31) umfasst, die einen Hohlraum (21) bildet, der sich entlang der optischen Achse (O) der Vorrichtung (10) von ihrem oberen Ende (19) zu ihrem unteren Ende (30) erstreckt, wobei das untere Ende (30) auf die starre gedruckte Leiterplatte (32) derart montiert ist, dass entlang der optischen Achse (O) der Vorrichtung (10) die elektronische Bildaufzeichnungsschaltung (36) und die optische Linse (22) ausgerichtet werden; und
ein flexibles Heizband (50), das in Berührung mit der Wand (31) des Linsenträgers (14) und um die Wand (31) des Linsenträgers (14) eingerichtet ist und eine elektrische Verbindungsschnittstelle (52) umfasst, die elektrisch mit der starren gedruckten Leiterplatte (32) der optischen Vorrichtung (10) verbunden ist;
**dadurch gekennzeichnet, dass**
die gedruckte Leiterplatte (32), das Heizband (50) und dielektrische Verbindungsschnittstelle (52) eine einzige gedruckte Leiterplatte sind, die einen starren Hauptabschnitt umfasst, der die starre gedruckte Leiterplatte (32) umfasst, und einen flexiblen Abschnitt, der das flexible Heizband (50) umfasst, und eine Verlängerung, die die elektrische Verbindungsschnittstelle (52) bildet, wobei der flexible Abschnitt mit dem Substrat des Hauptabschnitts durchgehend ist, und
die zwei Längsenden (54, 56) des Heizbands (50) Anbringungsmittel (58) umfassen, die das Heizband (50) gegen die Wand (31) des Linsenträgers (14) spannen.

2. Optische Vorrichtung (10) nach Anspruch 1, **dadurch gekennzeichnet, dass** die elektrische Schnittstelle (52) elektrisch mit der starren gedruckten Leiterplatte (32, die die elektronische Bildaufzeichnungsschaltung (36) umfasst, verbunden ist.

3. Optische Vorrichtung (10) nach einem der vorstehenden Ansprüche, **dadurch gekennzeichnet, dass** die Anbringungsmittel (58) einen elastischen Abschnitt derart umfassen, dass sie sich an das Profil der Wand (31) des Linsenträgers (14) anpassen.

4. Optische Vorrichtung (10) nach einem der vorstehenden Ansprüche, **dadurch gekennzeichnet, dass** das Heizband (50) elektrische Leiter (62) umfasst, die dazu konfiguriert sind, von einem elektrischen Strom, der von der gedruckten Leiterplatte (32, 34) stammt, durchlaufen zu werden.

5. Optische Vorrichtung (10) nach einem der vorstehenden Ansprüche, **dadurch gekennzeichnet, dass** das Heizband (50) durch eine gedruckte Leiterplatte vom flexiblen Typ gebildet ist.

6. Optische Vorrichtung (10) nach dem vorstehenden Anspruch, **dadurch gekennzeichnet, dass** die elektrische Schnittstelle (52) eine Verbindung vom Typ flexible gedruckte Leiterplatte mit durchgehendem Substrat mit dem Heizband (50) ist.

7. Optische Vorrichtung (10) nach einem der vorstehenden Ansprüche, **dadurch gekennzeichnet, dass** die elektrische Verbindungsschnittstelle (52) einen verdünnten Teil des Substrats der starren gedruckten Leiterplatte (32, 34) umfasst.

8. Verfahren zum Zusammenfügen einer optischen Vorrichtung (10) nach einem der vorstehenden Ansprüche, **dadurch gekennzeichnet, dass** es die folgenden Schritte umfasst:
Bereitstellung eines Linsenträgers (14), der mindestens eine optische Linse (22) umfasst, und eine Wand (31) umfasst, die einen Hohlraum (21) bildet, der sich entlang der optischen Achse (O) der Vorrichtung erstreckt;
Bereitstellung einer starren gedruckten Leiterplatte (32), die ein elektronisches Bildaufzeichnungsbauelement (36) umfasst;
Einrichten der starren gedruckten Leiterplatte (32) auf dem Linsenträger (14) derart, dass die elektronische Bildaufzeichnungsschaltung (36) und die optische Linse (22) entlang der optischen Achse (O) der Vorrichtung (10) ausgerichtet werden können;
Bereitstellen eines flexiblen Heizbands (50), das eine elektrische Verbindungsschnittstelle (52) und Anbringungsmittel (58) umfasst;
elektrisches Anschließen der elektrischen Verbindungsschnittstelle (52) an eine starre gedruckte Leiterplatte (32) der optischen Vorrichtung (10);
Einrichten des Heizbands (50) um die Wand (31) des Linsenträgers (14);
Halten des Heizbands gegen die Wand des Linsenträgers (14) anhand von Anbringungsmitteln (58), die an den beiden Längsenden (54, 56) des Heizbands (50) eingerichtet sind, die das Heizband (50) gegen die Wand (31) des Linsenträgers spannen;
wobei der Schritt des Bereitstellens der starren gedruckten Leiterplatte (32), der Schritt des Bereitstellens des Heizbands (50) und der Schritt des elektrischen Anschließens der elektrischen Verbindungsschnittstelle (52) an die starre gedruckte Leiterplatte (32) durch einen einzigen Schritt des Bereitstellens einer einzigen gedruckten Leiterplatte umgesetzt werden, die eine starre gedruckte Hauptleiterplatte umfasst, die das elektronische Bildaufzeichnungsbauelement (36) umfasst und eine flexible gedruckte Leiterplatte umfasst, die das flexible Heizband (50) umfasst, und eine Verlängerung umfasst, die die elektrische Verbindungsschnittstelle (52) bildet, wobei die flexible gedruckte Leiterplatte mit dem Substrat des starren Hauptteils durchgehend ist.

## Claims

1. Optical device (10) comprising
at least one rigid printed circuit board (32), said printed circuit board (32) comprising an image-capturing electronic circuit (36);
a lens support (14) comprising at least one optical lens (22), the lens support (14) comprising a wall (31) forming a cavity (21) extending along the optical axis (O) of the device (10) from its high end (19) as far as its low end (30), the low end (30) being mounted on the rigid printed circuit board (32) in such a way as to align, along the optical axis (O) of the device (10), the image-capturing electronic circuit (36) and optical lens (22); and
a flexible heating strip (50) located in contact with the wall (31) of the lens support (14) and around the wall (31) of the lens support (14), and comprising an electrical connection interface (52) electrically connected to the said rigid printed circuit board (32) of the optical device (10);
**characterized in that**
the said printed circuit board (32), the said heating strip (50), and the said electrical connection interface (52) are one single printed circuit board, comprising a rigid main portion comprising the said rigid printed circuit board (32), and a flexible portion comprising the flexible heating strip (50) and an extension forming the electrical connection interface (52), the said flexible portion being a continuity of the substrate of the rigid main part, and
the two longitudinal ends (54, 56) of the heating strip (50) comprise attachment means (58) which lock the heating strip (50) against the wall (31) of the lens support (14).

2. Optical device (10) according to claim 1, **characterized in that** the electrical connection interface (52) is electrically connected to the rigid printed circuit board (32) comprising the image-capturing electronic circuit (36).

3. Optical device (10) according to any one of the preceding claims, **characterized in that** the attachment means (58) comprise an elastic portion of such a type as to adjust to the profile of the wall (31) of the lens support (14).

4. Optical device (10) according to any one of the preceding claims, **characterized in that** the heating strip (50) comprises electrical conductors (62) configured such as the allow the passage of an electric current deriving from the printed circuit board (32, 34).

5. Optical device (10) according to any one of the preceding claims, **characterized in that** the heating strip (50) is formed by a printed circuit board of a flexible type.

6. Optical device (10) according to the preceding claim, **characterized in that** the electrical connection interface (52) is a connection of the flexible printed circuit board type which is a continuation of the substrate with the heating strip (50).

7. Optical device (10) according to any one of the preceding claims, **characterized in that** the electrical connection interface (52) comprises a thinned part of the substrate of the rigid printed circuit board (32, 34).

8. Method of assembling an optical device (10) according to any one of the preceding clams, **characterized in that** it comprises the following steps:
Provision of a lens support (14), comprising at least one optical lens (22) and comprising a wall (31) forming a cavity (21) extending along the optical axis of the device (O);
provision of a rigid printed circuit board (32), comprising an image-capturing electronic component (36);
locating the rigid printed circuit board (32) on the lens support (14) in such a way as to be able to align, along the optical axis (O) of the device (10), the image-capturing electronic circuit (36) and the optical lens (22);
provision of a flexible heating strip (50), comprising and electrical connection interface (52) and attachment means (58);
electrical connection of the electrical connection interface (52) to a rigid printed circuit board (32) of the optical device (10);
locating the heating strip (50) around the wall (31) of the lens support (14);
maintaining the heating strip against the wall of the lens support (14) by means of the attachment means (58) located at the two longitudinal ends (54, 56) of the heating strip (50), which lock the heating strip (50) against the wall (31) of the lens support (14);
wherein the step of providing the rigid printed circuit board (32), the step of providing the heating strip (50), and the step of electrical connection of the electrical connection interface (52) to the rigid printed circuit board (32) are put into effect by a single step of the provision of a single step of provision of a single printed circuit board, comprising a principal rigid printed circuit board which comprises the electronic image-capturing component (36), and comprising a flexible printed circuit board which comprises the flexible heating strip (50), and comprising an extension forming the electrical connection interface (52), the said flexible printed circuit board being a continuity of the substrate of the rigid main part.
